# EUROPEAN PATENT SPECIFICATION

(11) **EP 0 774 432 B1**
(45) Date of publication and mention of the grant of the patent: **03.07.2002**
(21) Application number: 96117711.0
(22) Date of filing: 06.11.1996
(51) Int. Cl.: B65G 59/00

(54) **Magazine for forwarding packaging sheets, especially in cigarette packaging machines or the like**
Magazin zum Weiterleiten von Verpackungsblättern, insbesondere für Zigarettenverpackungsmaschinen oder dergleichen
Magasin pour transférer des feuilles d'emballage, en particulier dans des machines d'emballage de cigarettes ou équivalent

(30) Priority: 15.11.1995 IT GE950121
(43) Date of publication of application: 21.05.1997
(73) Proprietor: SASIB TOBACCO S.p.A., 40128 Bologna (IT)
(72) Inventor: Martoccia, Nicola, 40100 Bologna (IT)
(74) Representative: Karaghiosoff, Giorgio Alessandro, Dott.

(56) References cited:
- EP-A- 0 548 519
- EP-A- 0 616 962
- FR-A- 2 655 033
- US-A- 4 787 810

## Description

The invention relates to a magazine for forwarding packs of packaging sheets, especially in cigarette packaging machines or the like, which magazine comprises a storage space for a stack of packs of packaging sheets that is made up of a plurality of vertically superimposed layers, each of which comprises at least one pack of packaging sheets, preferably two or more packs of packaging sheets, arranged in a plurality of rows directly adjacent to each other, with a separating sheet between each layer of packaging sheets and the adjacent layers, which magazine comprises means for extracting the packs of packaging sheets and forwarding them to the processing machine served by the magazine or to a conveyor line leading from the magazine to said processing machine; means for moving said extractor means along each layer of packs of packaging sheets; and means for gripping the separating sheets and unloading them into a collecting container, according to the pre-characterising part of claim 1.

In cigarette packaging machines, it is a known practice to forward the blanks for forming into rigid packets in packs containing a set number of blanks. These packs are assembled in stacks made up of a plurality of layers, each of which is separated from the adjacent layers by a separating sheet and comprises a plurality of mutually adjacent rows of packs of packaging sheets. The packs are extracted one at a time until the upper layer of the stack is finished. The separating sheet is then removed and the machine commences extracting packs of packaging sheets from the next layer down.

The document FR-A-2 655 033 discloses a magazine for forwarding layers of items which are stacked upon each other and which are separated by means of separating sheets, said known magazine having gripper means which are movable alternately between an active position and an inactive position in which they do not interfere with means for extracting and forwarding the layers of articles.

The object of the invention is to provide a magazine of the type described in the introduction, in such a way as to further improve its operation, ensuring greater efficiency and hence greater speed and reliability in the way it carries out each operational step necessary for the automatic extraction of packs of packaging sheets and forwarding them automatically to a subsequent processing machine.

The invention achieves the above objects with a magazine of the type described in the introduction according to the pre-characterising part of claim 1, in which
a) the gripper means are suspended from above over the stack of packs of packaging sheets, operate by suction, and can be raised and lowered and moved parallel to the horizontal plane, that is to said separating sheet in at least one direction, that is towards means for unloading said separating sheets which are provided at a certain distance to one side of the stack of packs of packaging sheets; at least the means for gripping and/or the means for unloading them into the collecting container being movable alternately between an active position and an inactive position in which they do not interfere with the means for extracting and forwarding the individual packs of packaging sheets from the stack to the subsequent packaging machine, and
b) the magazine comprises means for moving the extractor means, consisting of two mutually perpendicular horizontal beams, the first or upper beam being orientated transversely to the direction in which the packs of packaging sheets are forwarded to the processing machine and being supported above the stack of packs of packaging sheets by means for raising and lowering it, and the second or lower beam being orientated in the direction in which the packs of packaging sheets are forwarded to the processing machine and being suspended from a carriage that can move along the upper perpendicular beam, while the extractor means are able to travel in the direction in which packs of packaging sheets are forwarded on a carriage travelling along the second beam and the suction gripper means are suspended from the lower face of said second beam.

Said suction gripper means take the form of at least one pair of suckers, while each of the suckers is carried by a corresponding arm which is movable between a withdrawn position under the second beam that supports the means for extracting the packs of packaging sheets, in which withdrawn position the suckers are inactive and the arms supporting the latter do not interfere with said extractor means, and a projecting position out beyond the sides of the beam, in which position the suckers are active and the arms intersect the path of movement of the extractor means.

The arms can preferably pivot about axes which, as far as each pair of opposing sucker arms is concerned, are inclined so as to converge downwards towards each other and towards the central longitudinal axis of the beam, while the suckers are supported so that their axis is inclined with respect to the arms, in such a way that in the active position their axis is orientated vertically, that is to say perpendicularly to the separating sheets.

Advantageously, along the second beam that supports means for extracting packs of packaging sheets, there are a plurality of pairs of opposing sucker arms supported in such a way that they can all pivot together back and forth between said active position and said inactive position under the action of common drive means.

The pair or pairs of opposing sucker arms are preferably mounted on a carriage that also travels in both directions parallel to the longitudinal axis of the beam that supports the means for extracting the packs of packaging sheets.

Another feature is that the means for unloading the separating sheets are located at the ends of the paths of the sucker arms in the transverse direction to the direction in which the packs of packaging sheets are forwarded, or parallel to the forwarding axis but in the opposite direction, and consist of at least one planar surface on which the separating sheets are transferred, which surface is provided with means for pulling the separating sheet, and which surface has its unloading end in the entrance mouth of a collecting container, while its entrance end projects cantilever-fashion towards the stack of packs of packaging sheets.

The surface may take the form of a stationary means or advantageously of at least one, preferably two or more endless conveyor belts or straps that are lined up with each other side by side and have their unloading end in the entrance mouth of the collecting container.

Advantageously, the unloading belt or belts have their free turn end approximately level with the vertical plane corresponding to a lateral wall of the stack that faces towards said unloading belts, preferably a short distance from said plane.

The planar transfer surface or the unloading belt or belts can pivot about a common axis coinciding with their unloading ends, preferably approximately co-axial with the axis of the turning arc of the latter, between a horizontal active position, in which they form a horizontal conveying surface for the separating sheets and in which they project cantilever-fashion from the entrance mouth of the container towards said stack, and an inactive position, in which they are swung vertically down with their entrance ends pointing down.

The collecting container, a box or the like, is preferably orientated vertically, i.e. so as to accommodate the separating sheets vertically, and has an entrance mouth at the upper end, in which mouth are the turn ends of the unloading belts, means being provided for deflecting the separating sheet from the horizontal position on the unloading belts to the vertical position.

The deflecting means may be of any kind, as for example fixed deflecting barrier surfaces which may have a curved shape approximately coaxial with the turn path of the unloading belts at their outlet end.

In particular, in an improvement of the invention, in order to guarantee greater efficiency of the device, the deflecting means consist of one or more additional deflecting belts or straps. The deflecting belt or belts or straps are orientated such that their conveying sides are approximately vertical, and said deflecting belt or belts press against the unloading belt or belts in the area of their turn ends on their unloading ends, running in direct contact, surface against surface, with said belts, along at least a part of the circumference of the turning path, in particular along an arc of approximately 90°, from the top point approximately tangential to the horizontal plane, to a point tangential to the vertical plane, at the end of the turning arc leading into the collecting container.

With reference to an additional advantageous feature, the magazine is equipped with sensors for detecting the presence of packs of packaging sheets on a particular layer which control the movement of the extractor means in the rest position and the activation or deactivation of the gripper means, as well as of the unloading means that cooperate with these.

Said sensors may be of any kind and may take the form of, for example, at least one light barrier comprising an emitter and a receiver of electromagnetic rays. These lie basically within the horizontal plane and are preferably orientated generally in the longitudinal direction of the beam supporting the sucker arms and extractor means, that is in the direction in which the packs of packaging sheets are forwarded to the processing machine. There may be more than one of these sensors, or light barriers, and they can be supported so as to project downwards externally to the corresponding faces of the stack of packs of packaging sheets at the opposite ends of the beam supporting the means for extracting the packs of packaging sheets and sucker arms, which beam is made of a suitable length and located at a level approximately corresponding to that of the extractor means of the packs of packaging sheets and below the level of the sucker arms when these are in the active condition.

In combination with the sensors of packs of packaging sheets in a particular layer of the pack, it is possible to provide an additional sensor connected to the extractor means which detects the presence of packs of packaging sheets and the correct position of the extractor components with respect to the stack of packs of packaging sheets and to the remaining pack or packs still to be removed in order to finish the uppermost layer of the stack.

Here again it is possible to use other kinds of sensors in addition to the light barriers.

The advantages of the present invention will be clear from the above account. The particular form of construction of the means used for gripping and unloading the separating sheets from each layer of packs of packaging sheets in the stack means that the unloading operations can be carried out with great reliability and speed. The gripping and unloading means and the collecting container are designed to take up little room, and their rest positions leave the magazine completely free and easily accessible not only for the movements of the packaging sheet pack extractor means but also for any intervention by service personnel. The form of the structure, whereby the extractor means and separating sheet gripper means hang down from above and, more especially, the fact that this structure is common to both of these operating units not only simplifies the construction of the magazine, but also makes it functionally much more reliable and considerably less expensive.

The use of sensors to detect the presence of packs of packaging sheets on a corresponding layer of the stack and in consequence to activate or otherwise the extractor means and deactivate the separating sheet gripping and unloading means, or vice versa, enables checking times to be sharply reduced because the presence of packs of packaging sheets is detected simply by the transverse movement, along the associated upper beam, of the beam supporting the extractor and sensor means, which beam is orientated perpendicularly to the upper beam. A single pass is therefore sufficient to detect the presence of remaining packaging sheet packs in a particular layer of the stack, thereby sharply cutting down checking times and the length of the operating cycle.

The magazine according to the invention may have a bridge-like structure and be provided on all its vertical faces or on at least those vertical faces that are not directly adjacent to the processing machine, with mutually identical openings for the introduction of the stack of packaging sheet packs, at least one, and preferably at least three, of the faces being orientated parallel to one of the two beams, and the collecting container and unloading means being modular and able to be mounted in any of the openings of each of said vertical faces. Especially advantageous in this case is a rectangular parallelepiped geometry that basically reproduces the shape of the stack of packaging sheet packs, said parallelepiped stack being orientated the same way as the magazine-supporting structure, and both vertical lateral walls being orientated parallel to the direction in which the packs of packaging sheets are forwarded to the processing machine, while the remaining vertical wall furthest from the processing machine is orientated perpendicular to said forwarding direction.

The invention also includes other features that further enhance the above magazine and these are the subject of the dependent claims.

The special features of the invention and the resulting advantages will be shown in greater detail in a description of a preferred embodiment illustrated by way of a non-limiting example in the accompanying drawings, in which:
Fig. 1 is a perspective view of the magazine according to the invention in combination with a schematically illustrated processing machine.
Fig. 2 is a side elevation of the magazine of Fig. 1 viewed orthogonally to the direction in which the packaging sheet packs are forwarded to the processing machine.
Fig. 3 shows a cross-section of the magazine of the previous figures, on a vertical plane perpendicular to the direction in which the packaging sheet packs are forwarded to the processing machine.

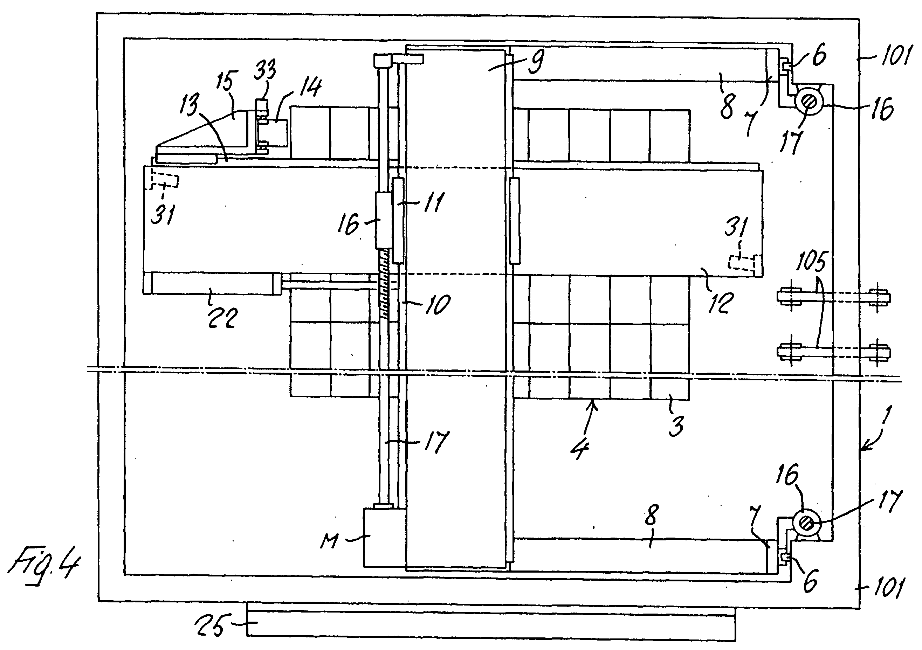

Fig. 4 is a plan view from above of the magazine of the previous figures.

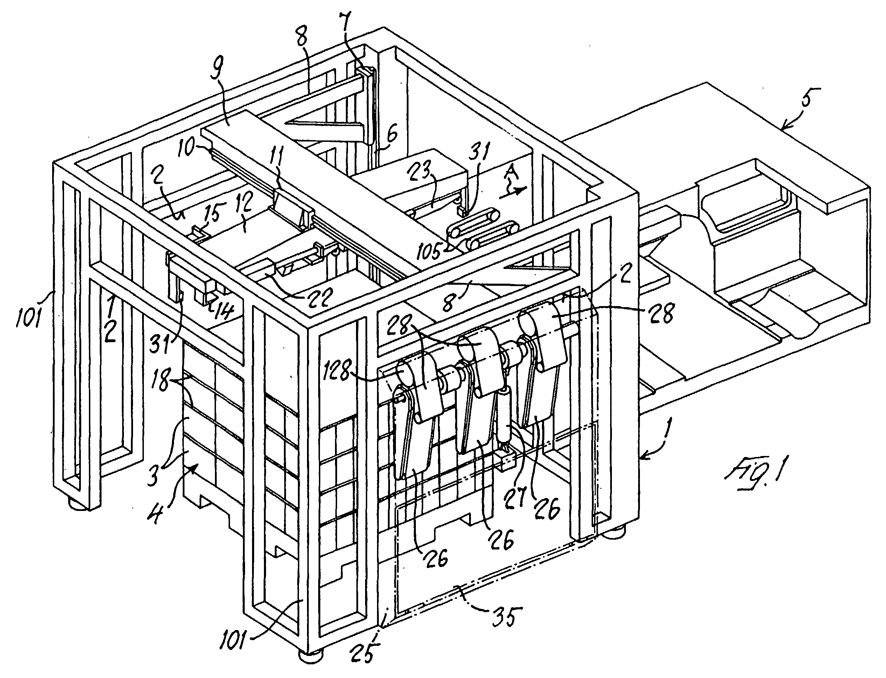

With reference to Fig. 1, a magazine for forwarding packs of packaging sheets, especially for a cigarette packaging machine, in which the packaging sheets are in the form of carton blanks for forming into hard packs for cigarettes, has a bridge-like load-bearing structure 1 of parallelepiped form. The structure comprises vertical corner posts 101 that laterally define openings 2 through which a stack 4 of packaging sheet packs 3 may be introduced into the middle of the magazine. The packs 3 are arranged in a stack 4 in a plurality of layers on top of each other, each of which layers is made up of a plurality of parallel rows of packs 3 touching each other. The packs 3 of blanks or of packaging sheets are also arranged so as to be vertically aligned with the packs 3 of the other layers. The stack 4 therefore has a parallelepiped shape very similar to that of the loadbearing structure 1 and is placed in the storage space with its faces lined up parallel to the corresponding faces of the bridge-like structure 1. The openings through which the stack 4 is introduced into the storage space of the magazine, provided in the three faces of the magazine, of which two are parallel to the direction in which the packs 3 are forwarded to the processing machine 5 and one, that opposite the face of the magazine adjacent to said processing machine 5, is perpendicular to the pack 3 forwarding direction A, are identical to each other. Extending down the vertical posts 101 of one transverse face with respect to the direction A in which the packs 3 are forwarded to the processing machine 5 are vertical slideways 6 for sliding blocks 7 for raising and lowering a pair of brackets 8 that are parallel to the forwarding direction A and extend along and parallel to the internal faces of the bridge-like structure 1. The two raising and lowering brackets 8 support, cantilever-fashion, approximately in the vertical mid plane and running across the forwarding direction A, a first horizontal beam 9 orientated transversely to the forwarding direction A. Said transverse beam 9 comprises a parallel slideway 10 from which a carriage 11 is suspended for the transverse movement of a second, lower beam 12. This too is horizontal and extends in the direction A in which the packs 3 of blanks are forwarded to the processing machine 5. This second beam 12 also has a slideway 13 orientated in the forwarding direction A, along which a carriage 15 travels for the movement of a means 14 for extracting the individual packs 3. Thanks to the particular construction of the means of movement, that is of the orthogonal beams 9, 12 and of the raising and lowering brackets 8, the extractor means 14 can assume any position in the three dimensions and can therefore extract all the packs 3 from all the superimposed layers of the stack 4. The drive for the sliding blocks 7 and the carriages 11, 15 may be provided by any means, for instance through respective screw-and-nut drives marked 16, 17 and motors M.

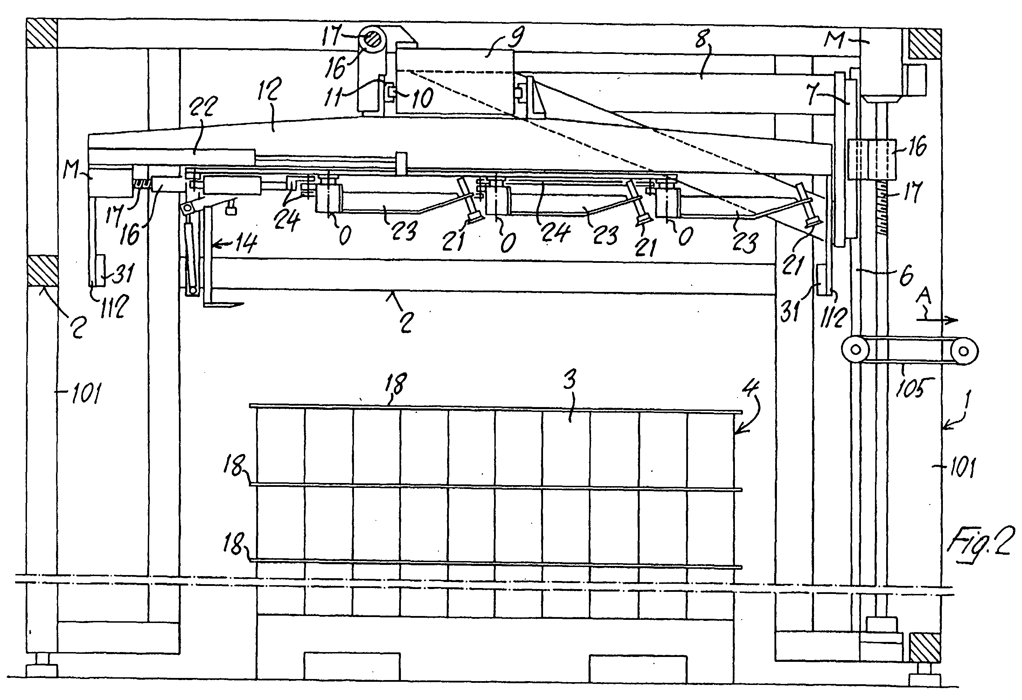

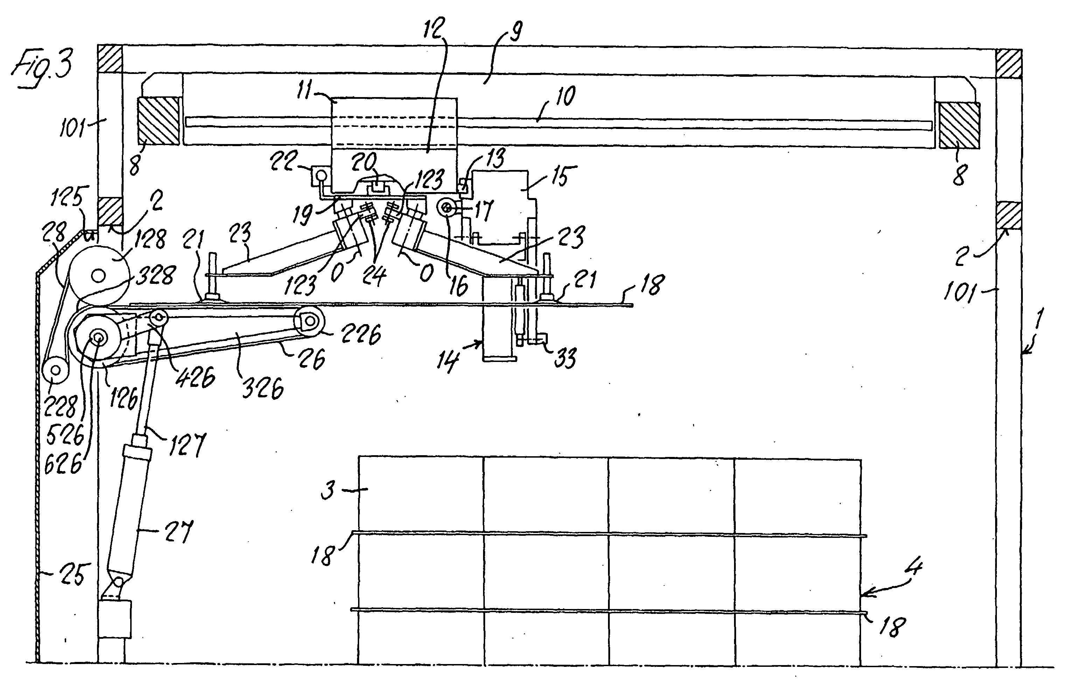

Between each layer of the stack 4 and the adjacent layers are separating sheets 18 that project a short distance out beyond the perimeter of these layers. Suspended from the lower beam 12 that carries the extractor means 14 and is orientated in the direction A in which the packs 3 are forwarded to the processing machine 5, are the means for gripping the separating sheets 18. Said gripper means are also mounted on a common sliding block 19 that travels along a slideway 20 parallel to said beam 12. The sliding block 19 can be driven along by any means and in the example illustrated is driven by a linear actuator 22 mounted between it and the stationary part of the beam 12. The separating sheet 18 gripper means consist of pairs of suckers 21 supported so as to project from either side of the lower beam 12. The suckers 21 are supported on the ends of opposing arms 23 which slope down towards their free end, on which the suckers 21 are mounted. In particular, the arms 23 can pivot about axes O that are inclined inwards and downwards towards the central axis of the beam 12, enabling them to be pivoted alternately outwards, in said inclined position where they project beyond the sides of the beam 12, or inwards in the retracted position, approximately parallel with and underneath the beam 12 (Figs. 2, 3).

Any drive means can be used, for example common rods 24 for the arms 23 on each side of the beam 12, with radial extensions 123 hinged to them and approximately diametrically opposite the arms 23 with respect to their pivot axis. The rods 24 can be run in both longitudinal directions by common actuators, such as motors equipped with appropriate transmission means to convert the rotary motion into linear motion, or by means of linear actuators, such as hydraulic, pneumatic or similar cylinders whose piston rods are connected to the rods 24. The rods 24 are preferably connected to each other and moved together so that all the arms 23 pivot simultaneously. In the active position (Fig. 3), the axes of the suckers 21 are orientated perpendicularly to the separating sheets 18. The suckers 21 may also be spring-mounted. The suckers 21 can be lowered onto the separating sheets 18 by the beam 12 movement means, while the transverse movement of the beam 12 along the upper beam 9 enables the separating sheets 18 to be carried to one of the lateral walls orientated in the forwarding direction A of the bridge-like structure 1. Furthermore, when the sliding block 19 is actuated, the arms 23 and hence the corresponding separating sheet 18 gripped by the suckers 21 can be moved along the forwarding axis A and in particular in the opposite direction to that of forwarding itself, towards the lateral transverse wall of the bridge-like structure 1 furthest from the processing machine 5.

In one of said faces of the bridge-like structure 1, that is one of the three sides not adjacent to the processing machine 5, is a container 25 for collecting the separating sheets 18. This is mounted in the relevant opening 2 of the bridge-like structure 1 and is made in the form of a thin vertical box with an opening at the top, preferably at the upper end of the inner wall relative to the magazine. Leading into said mouth 125 are one or more conveyor belts or straps 26 associated with the collecting container 25. The conveyor belts or straps 26 may extend the full transverse length of the separating sheet 18 or only part of this length, in which case, as illustrated in Fig. 1, three belts 26 lined up with each other are used.

The belts or straps 26 are turned around coaxial pulleys or rolls 126 in the region of the opening of the collecting container 25. These rolls 126 are mounted on a common horizontal driven shaft 626 which extends above the lower edge of the mouth 125 of the collecting container 25. The other turn roll or pulley 226 is situated at the opposite end of a bracket-like frame 326 which can pivot idly on bearings 526 about the drive shaft of the turn rolls 126 at the entrance mouth 125 of the collecting container 25. Its pivoting is controlled by a cylinder actuator 27 whose piston rod 127 is hinged to a radial arm 426 integral with said frame 326.

Cooperating with the belts or straps 26 are other belts or straps 28 for deflecting the separating sheet 18 from the horizontal position, in which the separating sheets are loaded onto these belts 26, into the vertical position in which they are stored in the collecting container 25. The deflecting belts or straps 28 are turned around rolls or pulleys 128, 228 which rotate about axes parallel to those of the turn pulleys or rolls 126, 226 of the unloading belts or straps 26, while the deflecting belts or straps 28 are orientated such that their conveying side 328 is approximately vertical. This conveying side 328 of the belts or straps 28 is towards the unloading belts 26 and presses against them around the turn roll 126 in the entrance mouth 125 of the collecting container 25. The upper turn roll 128 is lined up vertically directly above the turn roll 126 of the unloading belts 26 in the entrance mouth 125 of the collecting container 25, preferably with the two axes of said turn rolls 128, 126 in the same vertical plane and both turn rolls 128, 126 having approximately the same diameter. The lower turn roll 228 is both at a lower level than the turn roll 126 of the corresponding unloading belt 26 and to one side of said roll 126 in the direction of advance of the separating sheets 18 on the unloading belts 26. The arrangement and diameters of turn rolls 128, 228 are chosen such that the lower face of the conveying side 328 of the deflecting belt 28 is in contact with the upper face of the conveying side of the unloading belts 26 for a zone around the circumference of the turn roll 126 thereof. Said zone has an angular width of approximately 90° and corresponds to the upper quadrant of said turn rolls 126 on the opposite side from the stack 4 of packaging sheet packs 3, i.e. it corresponds to an arc of the turning path of the unloading belts 26 around their turn roll 126 that extends from the top tangential point of the upper horizontal side of the unloading belts 26 with the turn roll 126, in the entrance mouth 125 of the collecting container 25, at which point the upper turn roll 128 of the deflecting belts 28 is also tangential to said turn roll 126 of the unloading belts 26, as far as the tangential point of a vertical plane with said turn roll 126 of the unloading belts 26, on the side facing into the interior of the collecting container 25, and along which vertical plane there extends the remaining part of the conveying side 328 of the deflecting belts or straps 28. The arrangements of the turn rolls 128, 228 of the deflecting belts or straps 28 are also designed in order that, in addition to causing the turn roll 126 of the unloading belts 26 to act as a deflecting roll for the deflecting belts 28, the facing sides of said belts 26, 28 are also compressed against each other with a certain force around said zone of contact.

This construction has the advantage of deflecting the separating sheets 18 from the horizontal position to the vertical position in which they are stored in the collecting container 25 and also of providing a simple means of driving the deflecting belts 28, which are idle - for although these deflecting belts 28 can perfectly well have their own separate drive motor, it is advantageous if the rolls 128 and 228 of said belts 28 rotate freely about their shafts. This simplifies the construction of the device, the belts 28 being driven by the unloading belts 26 by the action of friction. The belts 26 can also operate the belts 28 through a transmission such as, for example, one or more gearwheels coupled in rotation, for example, to the ends of the drive shaft of the upper turn rolls 128 and meshing with gearwheels coupled in rotation with the turn rolls 126 or with the driven shaft 626 of the unloading belts 26. This method will also immediately produce the necessary contra-rotation of the two cooperating belts 28, 26.

The beam 12 carrying the extractor means 14 and gripper means 21, 23 is of such a length that its opposite ends terminate beyond the lateral walls of the stack 4 of packaging sheet packs 3.

At least one of said ends of the beam 12, and preferably both of the ends, carries sensors 31 suspended on supports 112 for detecting the presence of packaging sheet packs 3 in a particular layer of the stack 4.

Said sensors 31 may be of any type and consist in the example of light barriers comprising at least one emitter of electromagnetic rays and at least one receiver of said rays reflected by an obstacle struck by the emitted rays. The emitter and receiver are orientated to send and receive electromagnetic rays in the horizontal plane parallel to the separating sheets 18, preferably in the general longitudinal direction of the beam 12, that is approximately parallel to the direction A in which the packs of packaging sheets are forwarded. The two sensors 31 preferably point in opposite directions to each other.

With this arrangement, a simple transverse movement of the beam 12 from one side of the magazine to the other makes it possible to scan the uppermost layer of the stack 4 in order to detect the presence or complete absence of packs 3 of packaging sheets.

The sensors 31 are supported by the supports 112 at a level such that, when the extractor means 14 are approximately at their height for extracting the packs of packaging sheets, the electromagnetic rays are propagated in a horizontal plane lying at a height above the underlying separating sheet 18 which is intermediate with respect to the maximum vertical dimension of the packs 3.

In accordance with another feature, the extractor means 14 are also provided with sensors 33, for example light barriers, proximity sensors or the like, by means of which it is possible to move said means 14 into the correct position for extracting the corresponding pack 3 of packaging sheets.

Operation of the magazine is extremely simple and supervision of the various operating steps is left to a central control unit (not illustrated in detail) which collects the detection signals from the sensors 31, 33 and on the basis of these signals sends commands to the means that move the extractor means 14, the gripper means 21, 23 and the means 26, 28 for unloading the separating sheets 18 into the collecting container. When one of the periodical scans performed by the beam 12 with the aid of the sensors 31 and with a simple traversing action detects that all of the packs 3 of the uppermost layer have been removed, the extractor means 14 are moved into a rest position at one end of the beam 12. Next, the suction means 21, 23 for gripping the separating sheet 18 are activated by swinging the arms 23 out away from the beam 12 and thus lowering the suckers 21 with these arms onto the separating sheet 18. The separating sheet 18 is then raised to approximately the level of the upper conveying sides of the unloading belts 26 and deposited on these with a transverse movement of the beam 12, if the collecting container 25 with the unloading belts 26 and deflecting belts 28 is positioned along the vertical lateral walls parallel to the direction A in which the packaging sheet packs 3 are forwarded, or by moving the carriage 19 of the arms 23 in the longitudinal direction of the beam 12, if the collecting container 25 is located in the transverse face relative to the direction A in which the packaging sheet packs 3 are forwarded, on the opposite face from the processing machine 5. In the latter case, the rest position of the extractor means 14 is at the end of their supporting beam 12 nearest the processing machine 5, so as not to interfere with the free movement of the gripper means 21, 23 and the separating sheets 18.

The collecting container 25, with the unloading belts 26 and deflecting belts 28, is preferably constructed as a separate prefabricated modular unit. Said unit has means for connecting it to the structure 1 of the magazine, particularly in the openings 2 with predetermined positions and structure. Depending on requirements, therefore, the collecting container 25 with its associated means 26, 28 can be mounted in any of the three free faces of the bridge-like structure 1 of the magazine. With reference to Fig. 1, the outer wall of the collecting container 25 is completely or partly removable or openable, for example by means of a door 35.

The invention is naturally not limited to the embodiments described above and illustrated but can be considerably varied and modified, especially constructionally, without departing from the underlying principle set forth above and claimed below.

## Claims

1. Magazine for forwarding packs of packaging sheets, especially in cigarette packaging machines or the like, which magazine comprises a storage space for a stack (4) of packs (3) of packaging sheets that is made up of a plurality of vertically superimposed layers, each of which comprises at least one pack (3) of packaging sheets, preferably two or more packs (3) of packaging sheets, arranged in a plurality of rows directly adjacent to each other, with a separating sheet (18) between each layer of packaging sheets and the adjacent layers, which magazine comprises means (14) for extracting the packs (3) of packaging sheets and forwarding them to the processing machine (5) served by the magazine or to a conveyor line (105) leading from the magazine to said processing machine (5); means (6, 7, 8, 9, 10, 11, 12, 13, 15, 16, 17, M) for moving said extractor means (14) along each layer of packs (3) of packaging sheets; and means (21, 23) for gripping the separating sheets (18) and unloading them (26, 28) into a collecting container (25), the magazine being **characterized in that**
a) the gripper means (21, 23) are suspended (12, 24) from above over the stack (4) of packs (3) of packaging sheets, operate by suction, and can be raised and lowered (6, 7, 8, 16, 17, M) and moved parallel to the horizontal plane (9, 10, 11, 12, 16, 17, 19, 20, M), that is to said separating sheet (18) in at least one direction, that is towards means (26) for unloading said separating sheets (28) which are provided at a certain distance to one side of the stack (4) of packs (3) of packaging sheets; at least the means (21, 23) for gripping and/or the means (26) for unloading them into the collecting container (25) being movable (123, 24; 326, 27) alternately between an active position and an inactive position in which they do not interfere with the means (14) for extracting and forwarding the packs (3) of packaging sheets from the stack (4) to the subsequent processing machine (5), and
**characterized in**
b) the magazine comprises means for moving the extractor means (14), consisting of two mutually perpendicular horizontal beams (9, 12), the first or upper beam (9) being orientated transversely to the direction (A) in which the packs (3) of packaging sheets are forwarded to the processing machine (5) and being supported above the stack (4) of packs (3) of packaging sheets by means (6, 7, 8) for raising and lowering it, and the second or lower beam (12) being orientated in the direction (A) in which the packs (3) of packaging sheets are forwarded to the processing machine (5) and being suspended from a carriage (11) that can move along the upper perpendicular beam (9), while the extractor means (14) are able to travel in the direction (A) in which packs (3) of packaging sheets are forwarded on a carriage (15) travelling along the second beam (12) and the suction gripper means (21, 23) are suspended (19) from the lower face of said second beam (12).

2. Magazine according to Claim 1 , **characterized in that** the suction means (21, 23) for gripping the separating sheets (18) are mounted on a carriage (19) that also travels (20) in both directions parallel to the longitudinal axis of the beam (12) that supports the means (14) for extracting the packs (3) of packaging sheets, that is in the direction (A) in which said packs (3) are forwarded to the processing machine (5).

3. Magazine according to one or more of the previous claims, **characterized in that** the beam (12) that supports the means (14) for extracting the packs (3) of 5 packaging sheets and that supports the means (21, 23) for gripping the separating sheets (18) carries, in addition, sensors (31) for detecting the presence of packs (3) of packaging sheets in the uppermost layer, which sensors send and/or receive signals within the horizontal plane parallel to the separating sheets (18) and propagated approximately parallel to the beam (12), that is approximately parallel to the forwarding direction (A), which signals constitute scanning rays that can be moved transversely relative to the direction of propagation, by means of the transverse movements of the beam (12) itself along the upper beam (9).

4. Magazine according to Claim 3, **characterized in that** the beam (12) is longer than the corresponding dimension of the stack (4), its two ends projecting out beyond the associated faces of said stack (4), while on at least one of said ends, preferably on both of said ends, there is at least one sensor (31) orientated with its direction of detection approximately parallel to the beam (12) and towards the opposite end of the latter, and the sensors are suspended (112) at a level such that the plane of propagation of the detection signals is approximately coincident with the height dimension of the packs (3) of packaging sheets in the corresponding upper layer of the stack (4).

5. Magazine according to one or more of the previous claims, **characterized in that** the suction gripper means take the form of at least one pair of optionally spring-mounted suckers (21), each of which suckers (21) is carried by a corresponding arm (23) which is movable between a withdrawn position under the second beam (12) that supports the means (14) for extracting the packs (3) of packaging sheets, in which withdrawn position the suckers (3) are inactive and the sucker arms (23) do not interfere with said extractor means (14), and a projecting position out beyond the sides of the beam (12), in which position the suckers (21) are active and the arms (23) intersect the path of movement of the extractor means (14).

6. Magazine according to Claim 5, **characterized in that** the sucker arms (23) can pivot about axes (O) which, as far as each pair of opposing sucker arms (23) is concerned, are inclined so as to converge downwards towards each other and towards the central longitudinal axis of the beam (12) and lie in the same vertical plane running across the beam in the case of each pair of arms (23), while the suckers (21) are supported so that their axis is inclined with respect to the arms (23), in such a way that in the active position their axis is orientated vertically, that is to say perpendicularly to the separating sheets (18).

7. Magazine according to one or more of the previous claims, **characterized in that** along the second beam (12) that supports means (14) for extracting packs (3) of packaging sheets, there are a plurality of pairs of opposing sucker (21) arms (23) supported in such a way that they can all pivot together back and forth between said active position and said inactive position under the action of common drive means.

8. Magazine according to one or more of the previous claims, **characterized in that** the means (26, 28) for unloading the separating sheets (18) into the collecting container (25) are located at the ends of the paths of the gripper means (21, 23) in the transverse direction to the direction (A) in which the packs (3) of packaging sheets are forwarded, or parallel to the forwarding axis but in the opposite direction, and consist of at least one planar transfer surface which is parallel to the separating sheets, and which has its unloading end (126) in the entrance mouth (125) of a collecting container (25), while its entrance end (226) projects cantilever-fashion (326) towards the stack (4) of packs (3) of packaging sheets.

9. Magazine according to Claim 8, **characterized in that** the planar transfer surface for the separating sheets consists of at least one endless conveyor belt or several conveying belts or straps (26) that are lined up with each other side by side and distributed along the length of the separating sheet (18), which belt or belts (26) have their unloading ends (126) in the entrance mouth (125) of a collecting container (25), while their entrance ends (226) project cantilever-fashion (326) towards the stack (4) of packs (3) of packaging sheets.

10. Magazine according to Claim 8 or 9, **characterized in that** the planar transfer surface or the unloading belt or belts (26) have their free turn- and entrance-end (226) approximately level with the vertical plane corresponding to a lateral wall of the stack (4) that faces towards said unloading belts (26), preferably a short distance from said plane.

11. Magazine according to one or more of Claims 8 to 10, **characterized in that** the planar transfer surface or the unloading belt or belts (26) can pivot about a common axis (626) coinciding with their unloading ends (126), preferably approximately coaxial with the axis of the turning arc (126) of the latter, between a horizontal active position, in which they form a horizontal conveying surface for the separating sheets (18) and in which they project cantilever-fashion from the entrance mouth (125) of the collecting container (25) towards said stack (4), and an inactive position, in which they are swung down with at least the conveying side vertical and with their entrance ends (226) pointing down.

12. Magazine according to one or more of Claims 8 to 10, **characterized in that** the unloading belt or belts (26) are turned around end rolls (126, 226), the rolls (126) on one end, preferably on the unloading end, being mounted on a motorized shaft (626) orientated horizontally along the lower edge of said mouth (125), while the other end rolls (226) rotate freely about axes parallel to the motorized shaft (626) located in a frame (326), which frame is hinged and able to pivot freely (526) about the motorized shaft (626) for the rolls (126) on the exit ends of the unloading belts (26) in the entrance mouth (125) of the collecting container (25), the frame (326) being provided with a radial drive arm to which a linear actuator (27) is hinged to pivot it.

13. Magazine according to one or more of the previous claims, **characterized in that** the collecting container (25), a box or the like, is orientated vertically, i.e. so as to accommodate the separating sheets (18) vertically, and has an entrance mouth (125) at the upper end, preferably in the upper portion of the side facing the stack (4) of packs (3) of packaging sheets, in which mouth are the turn ends (126) of the unloading belts (26), which cooperate with deflection means (28) for deflecting the separating sheet from the horizontal position on the unloading belts (26) to the vertical position of accommodation in the collecting container (25), which collecting container (25) includes a wall, preferably external to the magazine, which is partly or completely removable and/or openable, or which is fitted with a door (35), preferably in its lower portion.

14. Magazine according to one or more of the previous claims, **characterized in that** the deflecting means consist of an appropriately shaped stationary turn barrier, or of one or more deflecting belts or straps (28) running around turn means (128, 228) rotating about axes parallel to the turn means (126, 226) of the unloading belts (26), while for part of their side (328) for conveying the separating sheet (18), the deflecting belts extend parallel to and in contact with the unloading belts (26) in the region of the turn means (126) on their outlet ends.

15. Magazine according to Claim 14, **characterized in that** the deflecting belt or belts or straps (28) have two turn means (128, 228) arranged with their axes lined up in a plane approximately vertical and perpendicular to the conveying plane of the unloading belts (26) while said deflecting belt or belts (28, 328) press against the corresponding unloading belt or belts (26), in the area of their turn ends on their unloading ends, running in direct contact, surface against surface, with said belts (26), along at least a part of the circumference of the turning path of the latter around the corresponding means (126), in particular along an arc of approximately 90°, from the top point approximately tangential to the horizontal plane, to a point tangential to the vertical plane, at the end of the turning arc leading into the interior of the collecting container (25).

16. Magazine according to one or more of the preceding claims, **characterized in that** the deflecting belt or belts (28) have one or more coaxial upper turn rolls (128) which are lined up vertically with respect to the turn roll or rolls (126) on the outlet end of the unloading belts (26) and are tangential to these at the point with which the horizontal plane is tangential, while the lower turn means (228) is arranged in such a position that the conveying side (328) of the deflecting belts (28) is deflected in turn with a predetermined frictional force against a portion of the unloading belts (26) corresponding to that upper quadrant of the turn rolls (126) of the unloading belt or belts (26) which faces the interior of the collecting container (25).

17. Magazine according to Claim 16, **characterized in that** the unloading belts (26) are motorized and, by means of friction, drive the deflecting belts (28) that are pressed against them for part of their path.

18. Magazine according to one or more of the previous claims, **characterized in that** the unloading belt or belts (26) drive the deflecting belts (28) by means of rotary-motion transmission means interposed between the turn rolls (128) of the deflecting belts (28) and the tangential turn rolls (126) of said belts (26).

19. Magazine according to one or more of the previous claims, **characterized in that** there is provided, in combination with the sensors (31) of packs (3) of packaging sheets in a corresponding layer of the stack, at least one additional sensor (33) connected to the extractor means (14) which detects the presence of packs (3) of packaging sheets and the correct position of the extractor components (14) with respect to the stack (4) of packs (3) of packaging sheets and to the remaining pack or packs (3) still to be removed in order to finish the uppermost layer of the stack (4).

20. Magazine according to one or more of the previous claims, **characterized in that** it has a bridge-like structure (1), one of whose faces is the outlet end of the packs (3) of packaging sheets and is orientated towards a subsequent processing station (5), while the remaining faces are free for the attachment of a collecting container (25), which latter and the unloading means (26, 28) are built as a separate modular processing unit with predetermined means allowing attachment to any of the remaining faces of the bridge-like structure, preferably in openings (2) through which the stacks (4) of packaging sheets are fed.

## Patentansprüche

1. Magazin zum Weiterleiten von Paketen von Verpackungsblättern, insbesondere für Zigarettenverpackungsmaschinen oder dergleichen, wobei das Magazin einen Lagerraum für einen Stapel (4) von Paketen (3) von Verpackungsblättern enthält, der aus einer Vielzahl von vertikal übereinander liegenden Lagen zusammengesetzt ist, von denen jede wenigstens ein Paket (3) von Verpackungsblättern, vorzugsweise zwei oder mehr Pakete (3) von Verpackungsblättern, enthält, die in einer Vielzahl von unmittelbar aneinandergrenzenden Reihen angeordnet sind, mit einem Trennblatt (18) zwischen jeder Lage von Verpackungsblättern und den angrenzenden Lagen, wobei das Magazin Mittel (14) zum Herausziehen der Pakete (3) von Verpackungsblättern und zu deren Weiterleitung zur durch das Magazin bedienten Verarbeitungsmaschine (5) oder zu einem aus dem Magazin zur Verarbeitungsmaschine (5) führenden Beförderungsband (105), Mittel (6, 7, 8, 9, 10, 11, 12, 13, 15, 16, 17, M) zum Bewegen der Herausziehmittel (14) entlang jeder Lage von Paketen (3) von Verpackungsblättern und Mittel (21, 23) zum Greifen der Trennblätter (18) und deren Entladung (26, 28) in einen Sammelbehälter (25) enthält, wobei das Magazin **dadurch gekennzeichnet ist, daß**
a) die Greifermittel (21, 23) von oben über dem Stapel (4) von Paketen (3) von Verpackungsblättern aufgehängt (12, 24) sind, durch Saugwirkung arbeiten und angehoben und abgesenkt (6, 7, 8, 16, 17, M) und parallel zur Horizontalebene (9, 10, 11, 12, 16, 17, 19, 20, M) bewegt werden können, d.h. zum Trennblatt (18) in wenigstens einer Richtung, d.h. zu Mitteln (26) zum Entladen der Trennblätter (28) hin, die in einem bestimmten Abstand zu einer Seite des Stapels (4) von Paketen (3) von Verpackungsblättern vorgesehen sind, wobei wenigstens die Mittel (21, 23) zum Greifen und/oder die Mittel (26) zu deren Entladung in den Sammelbehälter (25) wahlweise zwischen einer aktiven Position und einer inaktiven Position bewegbar (123, 24; 326, 27) sind, in welcher sie mit den Mitteln (14) zum Herausziehen und Weiterleiten der Pakete (3) von Verpackungsblättern aus dem Stapel (4) zur nachfolgenden Verarbeitungsmaschine (5) nicht in Konflikt geraten, und
b) das Magazin Mittel zum Bewegen der Herausziehmittel (14) enthält, die aus zwei zueinander senkrechten horizontalen Trägern (9, 12) bestehen, wobei der erste oder obere Träger (9) quer zur Richtung (A) ausgerichtet ist, in der die Pakete (3) von Verpackungsblättern zur Verarbeitungsmaschine (5) weitergeleitet werden, und oberhalb des Stapels (4) von Paketen (3) von Verpackungsblättern durch Mittel (6, 7, 8) zu seinem Anheben und Absenken getragen wird und der zweite oder untere Träger (12) in der Richtung (A) ausgerichtet ist, in der die Pakete (3) von Verpackungsblättern zur Verarbeitungsmaschine (5) weitergeleitet werden, und an einem Wagen (11) aufgehängt ist, der sich entlang dem oberen senkrechten Träger (9) bewegen kann, wogegen die Herausziehmittel (14) sich in der Richtung (A) bewegen können, in der Pakete (3) von Verpackungsblättern auf einem sich entlang dem zweiten Träger (12) bewegenden Wagen (15) weitergeleitet werden, und die Sauggreifermittel (21, 23) an der unteren Fläche des zweiten Trägers (12) aufgehängt (19) sind.

2. Magazin nach Anspruch 1, **dadurch gekennzeichnet, daß** die Saugmittel (21, 23) zum Greifen der Trennblätter (18) auf einem Wagen (19) angebracht sind, der sich auch in beiden Richtungen parallel zur Längsachse des Trägers (12) bewegt (20), der die Mittel (14) zum Herausziehen der Pakete (3) von Verpackungsblättern trägt, d.h. in der Richtung (A), in der die Pakete (3) zur Verarbeitungsmaschine (5) weitergeleitet werden.

3. Magazin nach einem oder mehreren der vorhergehenden Ansprüche, **dadurch gekennzeichnet, daß** der Träger (12), der die Mittel (14) zum Herausziehen der Pakete (3) von Verpackungsblättern trägt und der die Mittel (21, 23) zum Greifen der Trennblätter (18) trägt, zusätzlich Sensoren (31) zum Detektieren des Vorhandenseins von Paketen (3) von Verpackungsblättern in der obersten Lage trägt, wobei die Sensoren innerhalb der horizontalen, zu den Trennblättern (18) parallelen Ebene und sich angenähert parallel zum Träger (12) ausbreitende Signale senden und/oder empfangen, d.h. angenähert parallel zur Weiterleitungsrichtung (A), wobei die Signale Abtaststrahlen bilden, die in bezug zur Ausbreitungsrichtung mittels der Querbewegungen des Trägers (12) selbst entlang ,dem oberen Träger (9) quer bewegt werden können.

4. Magazin nach Anspruch 3, **dadurch gekennzeichnet, daß** der Träger (12) länger als die entsprechende Abmessung des Stapels (4) ist, wobei seine beiden Enden über die zugeordneten Flächen der Stapel (4) hinausragen, während sich an wenigstens einem der Enden, vorzugsweise an beiden Enden, zumindest ein Sensor (31) befindet, der mit seiner Detektionsrichtung angenähert parallel zum Träger (12) und zum entgegengesetzten Ende des letzteren hin ausgerichtet ist, und die Sensoren (112) in einer Höhe aufgehängt sind, so daß die Ausbreitungsebene der Detektionssignale mit der Höhenabmessung der Pakete (3) von Verpackungsblättern in der entsprechenden oberen Lage des Stapels (4) annähernd übereinstimmt.

5. Magazin nach einem oder mehreren der vorhergehenden Ansprüche, **dadurch gekennzeichnet, daß** die Sauggreifermittel die Form von wenigstens einem Paar optional federnd angebrachten Saugern (21) haben, wobei jeder der Sauger (21) durch einen entsprechenden Arm (23) getragen wird, der zwischen einer zurückgezogenen Position unter dem zweiten Träger (12), der die Mittel (14) zum Herausziehen der Pakete (3) von Verpackungsblättern trägt, wobei in der zurückgezogenen Position die Sauger (3) inaktiv sind und die Saugerarme (23) mit den Herausziehmitteln (14) nicht in Kollision geraten, und einer über die Seiten des Trägers (12) hinausragenden Position bewegbar ist, in der die Sauger (21) aktiv sind und die Arme (23) den Bewegungsweg der Herausziehmittel (14) schneiden.

6. Magazin nach Anspruch 5, **dadurch gekennzeichnet, daß** die Saugerarme (23) um Achsen (0) schwenken können, die, soweit jedes Paar entgegengesetzter Saugerarme (23) betroffen ist, so geneigt sind, daß sie nach unten hin zueinander und zur zentralen Längsachse des Trägers (12) hin konvergieren und in der gleichen vertikalen Ebene liegen, die quer durch den Träger im Falle jedes Armpaares (23) verläuft, wogegen die Sauger (21) so getragen sind, daß ihre Achsen in bezug auf die Arme (23) in solcher Weise geneigt sind, daß in der aktiven Position ihre Achse vertikal ausgerichtet ist, d.h. rechtwinklig zu den Trennblättern (18).

7. Magazin nach einem oder mehreren der vorhergehenden Ansprüche, **dadurch gekennzeichnet, daß** entlang dem zweiten Träger (12), der Mittel (14) zum Herausziehen von Paketen (3) von Verpackungsblättern trägt, eine Vielzahl von Paaren entgegengesetzter Sauger (21)-Armen (23) vorhanden ist, die auf solche Weise getragen werden, daß sie alle zusammen zwischen der aktiven Position und der inaktiven Position unter Betätigung üblicher Antriebsmittel zurück und vorwärts schwenken können.

8. Magazin nach einem oder mehreren der vorhergehenden Ansprüche, **dadurch gekennzeichnet, daß** die Mittel (26, 28) zum Entladen der Trennblätter (18) in den Sammelbehälter (25) an den Enden der Wege der Greifermittel (21, 23) in der Querrichtung zur Richtung (A), in der die Pakete (3) von Verpackungsblättern weitergeleitet werden, oder parallel zur Weiterleitungsachse, jedoch in der entgegengesetzten Richtung angeordnet sind und aus wenigstens einer ebenen Transportoberfläche bestehen, die parallel zu den Trennblättern ist und die ihr Entladeende (126) in der Eingangsöffnung (125) eines Sammelbehälters (25) hat, wogegen ihr Eingangsende (226) auslegerartig (326) zum Stapel (4) von Paketen (3) von Verpackungsblättern hin hervorragt.

9. Magazin nach Anspruch 8, **dadurch gekennzeichnet, daß** die ebene Transportoberfläche für die Trennblätter aus wenigstens einem endlosen Förderriemen oder einigen Förderriemen oder -bändern (26) besteht, die aneinander Seite an Seite angereiht und entlang der Länge der Trennblätter (18) verteilt sind, wobei der oder die Riemen (26) ihre Entladeenden (126) in der Eingangsöffnung (125) eines Sammelbehälters (25) haben, wogegen ihre Eingangsenden (226) auslegerartig (326) zum Stapel (4) von Paketen (3) von Verpackungsblättern hin hervorragen.

10. Magazin nach Anspruch 8 oder 9, **dadurch gekennzeichnet, daß** die ebene Transportoberfläche oder der Entladeriemen oder die Entladeriemen (26) ihr freies Dreh- und Eingangsende (226) angenähert in Höhe der vertikalen Ebene haben, die einer Seitenwand des Stapels (4) entspricht, die den Entladeriemen (26) gegenübersteht, vorzugsweise in kurzem Abstand von dieser Ebene.

11. Magazin nach einem oder mehreren der Ansprüche 8 bis 10, **dadurch gekennzeichnet, daß** die ebene Transportoberfläche oder der Entladeriemen oder die Entladeriemen (26) um eine gemeinsame Achse (626), die mit deren Entladeenden (126) übereinstimmt und vorzugsweise näherungsweise koaxial zur Achse des Drehbogens (126) von letzteren ist, zwischen einer horizontalen aktiven Position, in der sie eine horizontale Förderoberfläche für die Trennblätter (18) bilden und in der sie auslegerartig aus der Eingangsöffnung (125) des Sammelbehälters (25) zu dem Stapel (4) hin herausragen, und einer inaktiven Position, in der sie mit wenigstens der Förderseite vertikal und mit ihren Eingangsenden (226) nach unten gerichtet herabgeschwungen sind, schwenken können.

12. Magazin nach einem oder mehreren der Ansprüche 8 bis 10, **dadurch gekennzeichnet, daß** der Entladeriemen oder die Entladeriemen (26) um Endrollen (126, 226) herum gedreht werden, wobei die Rollen (126) an einem Ende, vorzugsweise am Entladeende, an einer motorisierten Welle (626) befestigt sind, die horizontal entlang der Unterkante der Öffnung (125) ausgerichtet ist, während die anderen Endrollen (226) frei um Achsen drehen, die parallel zur motorisierten Welle (626) verlaufen, die in einem Rahmen (326) angeordnet ist, wobei der Rahmen angelenkt ist und frei (526) um die motorisierte Welle (626) für die Rollen (126) am Ausgangsende der Entladeriemen (26) in der Eingangsöffnung (125) des Sammelbehälters (25) schwenken kann, wobei der Rahmen (326) mit einem radialen Antriebsarm versehen ist, an dem ein lineares Stellglied (27) angelenkt ist, um ihn zu schwenken.

13. Magazin nach einem oder mehreren der vorhergehenden Ansprüche, **dadurch gekennzeichnet, daß** der Sammelbehälter (25), ein Gehäuse oder dergleichen, vertikal ausgerichtet ist, d.h. so, daß die Trennblätter (18) vertikal untergebracht werden, und eine Eingangsöffnung (125) am oberen Ende hat, vorzugsweise im oberen Teil der Seite, die dem Stapel (4) von Paketen (3) von Verpackungsblättern gegenüberliegt, wobei in der Öffnung die Drehenden (126) der Entladeriemen (26) sind, die mit Ablenkungsmittelen (28) zum Ablenken der Trennblätter aus der horizontalen Position auf den Entladeriemen (26) in die vertikale Position zur Unterbringung im Sammelbehälter (25) zusammenwirken, wobei der Sammelbehälter (25) vorzugsweise außerhalb des Magazins eine Wand enthält, die teilweise oder vollständig entfernbar und/oder zu öffnen ist oder die, vorzugsweise in ihrem unteren Teil, mit einer Türe (35) versehen ist.

14. Magazin nach einem oder mehreren der vorhergehenden Ansprüche, **dadurch gekennzeichnet, daß** die Ablenkmittel aus einer geeignet gestalteten stationären Drehschranke oder aus einem oder mehreren ablenkenden Riemen oder Bändern (28) bestehen, die um Drehmittel (128, 228) laufen, die sich um Achsen drehen, die parallel zu den Drehmitteln (126, 226) der Entladeriemen (26) sind, wogegen, was ihre Seite (328) zum Befördern der Trennblätter (18) angeht, die Ablenkriemen sich parallel zu und in Berührung mit den Entladeriemen (26) im Bereich der Drehmittel (126) an ihren Auslaßenden erstrecken.

15. Magazin nach Anspruch 14, **dadurch gekennzeichnet, daß** der Ablenkriemen oder die Ablenkriemen oder -bänder (28) zwei Drehmittel (128, 228) aufweisen, die mit ihren Achsen in einer angenähert vertikalen und rechtwinklig zur Beförderungsebene der Entladeriemen (26) liegenden Ebene angereiht sind, wogegen der Ablenkriemen oder die Ablenkriemen (28, 328) gegen den entsprechenden Entladeriemen oder die entsprechenden Entladeriemen (26) drücken, wobei sie im Bereich ihrer Drehenden an ihren Entladeenden in unmittelbarem Kontakt, Oberfläche gegen Oberfläche, mit den Riemen (26) entlang wenigstens einem Teil des Umfangs des Drehweges des letzteren um die entsprechenden Mittel (126), insbesondere entlang einem Bogen von angenähert 90° vom obersten Punkt angenähert tangential zur Horizontalebene zu einem Punkt tangential zur Vertikalebene, am Ende des Wendebogens in das Innere des Sammelbehälters (25) führend, laufen.

16. Magazin nach einem oder mehreren der vorhergehenden Ansprüche, **dadurch gekennzeichnet, daß** der Ablenkriemen oder die Ablenkriemen (28) eine oder mehr koaxiale obere Drehrollen (128) aufweisen, die vertikal in bezug auf die Drehrolle oder -rollen (126) am Auslaßende der Entladeriemen (26) angereiht und tangential zu diesen an dem Punkt sind, in dem die Horizontalebene tangential ist, wogegen das untere Drehmittel (228) in einer solchen Position angeordnet ist, daß die Beförderungsseite (328) der Ablenkriemen (28) ihrerseits mit einer vorher festgelegten Reibungskraft gegen einen Teil der Entladeriemen (26) abgelenkt wird, der jenem oberen Quadranten der Drehrollen (126) des Entladeriemens oder der Entladeriemen (26) entspricht, der dem Inneren des Sammelbehälters (25) gegenüberliegt.

17. Magazin nach Anspruch 16, **dadurch gekennzeichnet, daß** die Entladeriemen (26) motorisiert sind und mittels Reibung die Ablenkriemen (28) antreiben, die gegen sie für einen Teil ihres Weges angedrückt werden.

18. Magazin nach einem oder mehreren der vorhergehenden Ansprüche, **dadurch gekennzeichnet, daß** der Entladeriemen oder die Entladeriemen (26) die Ablenkriemen (28) mittels Rotationsübertragungsmitteln antreiben, die zwischen den Drehrollen (128) der Ablenkriemen (28) und den tangentialen Drehrollen (126) der Riemen (26) angeordnet sind.

19. Magazin nach einem oder mehreren der vorhergehenden Ansprüche, **dadurch gekennzeichnet, daß** in Kombination mit den Sensoren (31) von Paketen (3) von Verpackungsblättern in einer entsprechenden Lage des Stapels wenigstens ein zusätzlicher, mit den Herausziehmitteln (14) verbundener Sensor (33) vorgesehen ist, der das Vorhandensein von Paketen (3) von Verpackungsblättern und die korrekte Position der Herausziehkomponenten (14) in bezug auf den Stapel (4) von Paketen (3) von Verpackungsblättern und auf das verbleibende Paket oder die verbleibenden Pakete (3) detektiert, die noch entfernt werden müssen, um die oberste Lage des Stapels (4) zu beenden.

20. Magazin nach einem oder mehreren der vorhergehenden Ansprüche, **dadurch gekennzeichnet, daß** es einen brückenartigen Aufbau (1) hat, wobei eine von dessen Flächen das Auslaßende der Pakete (3) von Verpackungsblättern ist und zu einer nachfolgenden Verarbeitungsstation (5) hin ausgerichtet ist, wogegen die übrigen Flächen frei für die Anbringung eines Sammelbehälters (25) sind, wobei letzterer und die Entlademittel (26, 28) als eine getrennte modulare Verarbeitungseinheit mit vorher festgelegten Mitteln aufgebaut sind, die eine Anbringung an jeder beliebigen der übrigen Flächen des brückenartigen Aufbaus ermöglichen, vorzugsweise in Öffnungen (2), durch welche die Stapel (4) von Verpackungsblättern zugeführt werden.

## Revendications

1. Magasin pour transférer des paquets de feuilles d'emballage, en particulier dans des machines d'emballage de cigarettes ou analogues, lequel magasin comprend un espace de stockage pour une pile (4) de paquets (3) de feuilles d'emballage qui est constituée de plusieurs couches verticalement superposées, dont chacune comprend au moins un paquet (3) de feuilles d'emballage, de préférence deux paquets (3) de feuilles d'emballage ou davantage, disposés suivant plusieurs rangées directement adjacentes l'une à l'autre, avec une feuille séparatrice (18) entre chaque couche de feuilles d'emballage et les couches adjacentes, lequel magasin comprend des moyens (14) servant à extraire les paquets (3) de feuilles d'emballage et à les transférer à la machine de traitement (5) desservie par le magasin ou à une ligne transporteuse (105) menant du magasin à ladite machine de traitement (5) ; des moyens (6, 7, 8, 9, 10, 11, 12, 13, 15, 16, 17, M) servant à déplacer lesdits moyens extracteurs (14) le long de chaque couche de paquets (3) de feuilles d'emballage ; et des moyens (21, 23) servant à saisir les feuilles séparatrices (18) et à les décharger (26, 28) dans un récipient collecteur (25), le magasin étant **caractérisé en ce que**
a) les moyens de saisie (21, 23) sont suspendus (12, 24) d'en haut au-dessus de la pile (4) de paquets (3) de feuilles d'emballage, fonctionnent par aspiration et peuvent être levés et abaissés (6, 7, 8, 16, 17, M) et déplacés parallèlement au plan horizontal (9, 10, 11, 12, 16, 17, 19, 20, M), c'est-à-dire à ladite feuille séparatrice (18) dans au moins une direction, c'est-à-dire vers des moyens (26) servant à décharger lesdites feuilles séparatrices (28) qui sont prévus à une certaine distance vis-à-vis d'un côté de la pile (4) de paquets (3) de feuilles d'emballage ; au moins les moyens (21, 23) servant à saisir et/ou les moyens (26) servant à les décharger dans le récipient collecteur (25) étant mobiles (123, 24 ; 326, 27) d'une manière alternée entre une position active et une position inactive dans laquelle ils ne font pas obstacle aux moyens (14) servant à extraire et transférer les paquets (3) de feuilles d'emballage depuis la pile (4) jusqu'à la machine de traitement (5) qui suit, et
b) le magasin comprend des moyens servant à déplacer les moyens extracteurs (14), constitués de deux poutrelles (9, 12) horizontales perpendiculaires entre elles, la première poutrelle ou poutrelle supérieure (9) étant orientée transversalement à la direction (A) dans laquelle les paquets (3) de feuilles d'emballage sont transférés à la machine de traitement (5) et étant portée au-dessus de la pile (4) de paquets (3) de feuilles d'emballage à l'aide de moyens (6, 7, 8) servant à la lever et l'abaisser, et la seconde poutrelle ou poutrelle inférieure (12) étant orientée dans la direction (A) dans laquelle les paquets (3) de feuilles d'emballage sont transférés à la machine de traitement (5) et étant suspendue à partir d'un chariot (11) qui peut se déplacer le long de la poutrelle supérieure (9) perpendiculaire, tandis que les moyens extracteurs (14) peuvent se déplacer, dans la direction (A) dans laquelle les paquets (3) de feuilles d'emballage sont transférés, sur un chariot (15) se déplaçant le long de la seconde poutrelle (12) et les moyens de saisie par aspiration (21, 23) sont suspendus (19) à partir de la face inférieure de ladite seconde poutrelle (12).

2. Magasin suivant la revendication 1, **caractérisé en ce que** les moyens d'aspiration (21, 23) servant à saisir les feuilles séparatrices (18) sont montés sur un chariot (19) qui se déplace (20) également dans les deux directions parallèles à l'axe longitudinal de la poutrelle (12) qui porte les moyens (14) servant à extraire les paquets (3) de feuilles d'emballage, c'est-à-dire dans la direction (A) dans laquelle les paquets (3) sont transférés à la machines de traitement (5).

3. Magasin suivant une ou plusieurs des revendications précédentes, **caractérisé en ce que** la poutrelle (12) qui porte les moyens (14) servant à extraire les paquets (3) de feuilles d'emballage et qui porte les moyens (21, 23) servant à saisir les feuilles séparatrices (18) transporte, en outre, des détecteurs (31) servant à détecter la présence de paquets (3) de feuilles d'emballage dans la couche située le plus haut, lesquels détecteurs émettent et/ou reçoivent des signaux situés dans le plan horizontal parallèle aux feuilles séparatrices (18) et propagés d'une manière approximativement parallèle à la poutrelle (12), c'est-à-dire d'une manière approximativement parallèle à la direction de transfert (A), lesquels signaux constituent des rayons de balayage qui peuvent être déplacés transversalement vis-à-vis de la direction de propagation, au moyen des déplacements transversaux de la poutrelle (12) elle-même le long de la poutrelle supérieure (9).

4. Magasin suivant la revendication 3, **caractérisé en ce que** la poutrelle (12) est plus longue que la dimension correspondante de la pile (4), ses deux extrémités dépassant au-delà des faces associées de ladite pile (4), tandis que, sur au moins l'une desdites extrémités, de préférence sur l'une et l'autre desdites extrémités, il existe au moins un détecteur (31) orienté avec sa direction de détection approximativement parallèle à la poutrelle (12) en direction de l'extrémité opposée de cette dernière, et les détecteurs sont suspendus (112) à un niveau tel que le plan de propagation des signaux de détection coïncide approximativement avec la dimension en hauteur des paquets (3) de feuilles d'emballage dans la couche supérieure correspondante de la pile (4).

5. Magasin suivant une ou plusieurs des revendications précédentes, **caractérisé en ce que** les moyens de saisie par aspiration prennent la forme d'au moins une paire de ventouses (21) facultativement montées sur ressort, ventouses (21) dont chacune est transportée par un bras (23) correspondant qui est mobile entre une position rétractée au-dessous de la seconde poutrelle (12) qui porte les moyens (14) servant à extraire les paquets (3) de feuilles d'emballage, position rétractée dans laquelle les ventouses (3) sont inactives et les bras à ventouse (23) ne font pas obstacle auxdits moyens extracteurs (14), et une position dépassant au-delà des côtés de la poutrelle (12), position dans laquelle les ventouses (21) sont actives et les bras (23) recoupent la trajectoire de déplacement des moyens extracteurs (14).

6. Magasin suivant la revendication 5, **caractérisé en ce que** les bras à ventouse (23) peuvent pivoter autour d'axes (0) qui, dans la mesure où chaque paire de bras à ventouse (23) opposés est concernée, sont inclinés de façon à converger vers le bas l'un vers l'autre et vers l'axe longitudinal central de la poutrelle (12) et sont situés dans le même plan vertical passant d'un côté à l'autre de la poutrelle dans le cas de chaque paire de bras (23), tandis que les ventouses (21) sont portées de façon que leurs axes soient inclinés vis-à-vis des bras (23), d'une manière telle que, dans la position active, leur axe est orienté verticalement, c'est-à-dire perpendiculairement aux feuilles séparatrices (18).

7. Magasin suivant une ou plusieurs des revendications précédentes, **caractérisé en ce que**, le long de la seconde poutrelle (12) qui porte les moyens (14) servant à extraire les paquets (3) de feuilles d'emballage, il existe plusieurs paires de bras (23) à ventouse (21) opposés portés d'une manière telle qu'ils peuvent tous pivoter ensemble vers l'arrière et vers l'avant entre ladite position active et ladite position inactive sous l'action de moyens d'entraînement communs.

8. Magasin suivant une ou plusieurs des revendications précédentes, **caractérisé en ce que** les moyens (26, 28) servant à décharger les feuilles séparatrices (18) dans le récipient collecteur (25) sont situés aux extrémités des trajectoires des moyens de saisie (21, 23) dans la direction transversale à la direction (A) dans laquelle les paquets (3) de feuilles d'emballage sont transférés, ou parallèlement à l'axe de transfert, mais dans la direction opposée, et consistent en au moins une surface plane de transfert qui est parallèle aux feuilles séparatrices, et qui a son extrémité de déchargement (126) dans l'embouchure d'entrée (125) d'un récipient collecteur (25), tandis que son extrémité d'entrée (226) dépasse en porte-à-faux (326) vers la pile (4) de paquets (3) de feuilles d'emballage.

9. Magasin suivant la revendication 8, **caractérisé en ce que** la surface plane de transfert pour les feuilles séparatrices est constituée d'au moins une bande transporteuse sans fin ou de plusieurs bandes ou courroies transporteuses (26) qui sont alignées entre elles côte à côte et réparties le long de la longueur de la feuille séparatrice (18), laquelle ou lesquelles bandes (26) ont leurs extrémités de déchargement (126) dans l'embouchure d'entrée (125) d'un récipient collecteur (25), tandis que leurs extrémités d'entrée (226) dépassent en porte-à-faux (326) vers la pile (4) de paquets (3) de feuilles d'emballage.

10. Magasin suivant la revendication 8 ou 9, **caractérisé en ce que** la surface plane de transfert ou la ou les bandes de déchargement (26) ont leur extrémité libre de renvoi et d'entrée (226) approximativement de niveau avec le plan vertical correspondant à une paroi latérale de la pile (4) qui fait face vers lesdites bandes de déchargement (26), de préférence à une courte distance dudit plan.

11. Magasin suivant une ou plusieurs des revendications 8 à 10, **caractérisé en ce que** la surface plane de transfert ou la ou les bandes de déchargement (26) peuvent basculer autour d'un axe commun (626) coïncidant avec leurs extrémités de déchargement (126), de préférence d'une manière approximativement coaxiale à l'axe de l'arc de renvoi (126) de ces dernières, entre une position active horizontale, dans laquelle elles forment une surface de transport horizontale pour les feuilles séparatrices (18) et dans laquelle elles dépassent en porte-à-faux à partir de l'embouchure d'entrée (125) du récipient collecteur (25) vers ladite pile (4), et une position inactive, dans laquelle elles sont basculées vers le bas avec au moins le côté de transport vertical et avec leurs extrémités d'entrée (226) dirigées vers le bas.

12. Magasin suivant une ou plusieurs des revendications 8 à 10, **caractérisé en ce que** la ou les bandes de déchargement (26) sont renvoyées autour de rouleaux d'extrémité (126, 226), les rouleaux (126) situés sur une extrémité, de préférence sur l'extrémité de déchargement, étant montés sur un arbre motorisé (626) orienté horizontalement le long du bord inférieur de ladite embouchure (125), tandis que les autres rouleaux d'extrémité (226) tournent librement autour d'axes parallèles à l'arbre motorisé (626) avec un montage dans un bâti (326), lequel bâti est articulé et capable de basculer librement (526) autour de l'arbre motorisé (626) prévu pour les rouleaux (126) situés sur les extrémités de sortie des bandes de déchargement (26) dans l'embouchure d'entrée (125) du récipient collecteur (25), le bâti (326) étant pourvu d'un bras radial d'entraînement auquel un actionneur linéaire (27) est articulé de façon à le faire basculer.

13. Magasin suivant une ou plusieurs des revendications précédentes, **caractérisé en ce que** le récipient collecteur (25), un caisson ou analogue, est orienté verticalement, c'est-à-dire de façon à recevoir les feuilles séparatrices (18) verticalement, et comporte une embouchure d'entrée (125) à l'extrémité supérieure, de préférence dans la partie supérieure du côté faisant face à la pile (4) de paquets (3) de feuilles d'emballage, embouchure dans laquelle sont situées les extrémités de renvoi (126) des bandes de déchargement (26), qui coopèrent avec des moyens de déviation (28) servant à dévier la feuille séparatrice de la position horizontale sur les bandes de déchargement (26) à la position verticale de logement dans le récipient collecteur (25), lequel récipient collecteur (25) comporte une paroi, de préférence extérieure au magasin, qui est partiellement ou complètement amovible et/ou ouvrable, ou qui est pourvue d'une porte (35), de préférence dans sa partie inférieure.

14. Magasin suivant une ou plusieurs des revendications précédentes, **caractérisé en ce que** les moyens de déviation sont constitués d'une barrière de renvoi fixe de forme appropriée, ou d'une ou plusieurs bandes ou courroies de déviation (28) passant autour de moyens de renvoi (128, 228) tournant autour d'axes parallèles aux moyens de renvoi (126, 226) des bandes de déchargement (26), tandis que, par une partie de leur côté (328) servant à transporter la feuille séparatrice (18), les bandes de déviation s'étendent parallèlement aux bandes de déchargement (26) et en contact avec celles-ci dans la zone des moyens de renvoi (126) situés sur leurs extrémités de sortie.

15. Magasin suivant la revendication 14, **caractérisé en ce que** la ou les bandes ou courroies de déviation (28) comportent deux moyens de renvoi (128, 228) disposés avec leurs axes alignés dans un plan approximativement vertical et perpendiculaire au plan de transport des bandes de déchargement (26), tandis que ladite ou lesdites bandes de déviation (28, 328) exercent une pression sur la ou les bandes de déchargement (26) correspondantes, dans la zone de leurs extrémités de renvoi situées sur leurs extrémités de déchargement, en se déplaçant en contact direct, surface contre surface, avec les bandes (26), le long d'au moins une partie de la circonférence de la trajectoire de renvoi de ces dernières autour des moyens (126) correspondants, en particulier le long d'un arc d'approximativement 90°, depuis le point supérieur approximativement tangentiel au plan horizontal, jusqu'à un point tangentiel au plan vertical, à l'extrémité de l'arc de renvoi conduisant à l'intérieur du récipient collecteur (25).

16. Magasin suivant une ou plusieurs des revendications précédentes, **caractérisé en ce que** la ou les bandes de déviation (28) comportent un ou plusieurs rouleaux supérieurs de renvoi (128) coaxiaux qui sont alignés verticalement vis-à-vis du ou des rouleaux de renvoi (126) sur l'extrémité de sortie des bandes de déchargement (26) et sont tangents à ceux-ci au point auquel le plan horizontal est tangentiel, tandis que les moyens inférieurs de renvoi (228) sont disposés dans une position telle que le côté de transport (328) des bandes de déviation (28) est dévié à son tour avec une force de frottement préfixée contre une partie des bandes de déchargement (26) correspondant à ce quadrant supérieur des rouleaux de renvoi (126) de la ou des bandes de déchargement (26) qui fait face à l'intérieur du récipient collecteur (25).

17. Magasin suivant la revendication 16, **caractérisé en ce que** les bandes de déchargement (26) sont motorisées et, au moyen d'un frottement, entraînent les bandes de déviation (28) qui sont appliquées sur elles sous pression par une partie de leur trajectoire.

18. Magasin suivant une ou plusieurs des revendications précédentes, **caractérisé en ce que** la ou les bandes de déchargement (26) entraînent les bandes de déviation (28) à l'aide de moyens de transmission de mouvement de rotation interposés entre les rouleaux de renvoi (128) des bandes de déviation (28) et les rouleaux de renvoi tangentiels (126) desdites bandes (26).

19. Magasin suivant une ou plusieurs des revendications précédentes, **caractérisé en ce qu'**il est prévu, en combinaison avec les détecteurs (31) de paquets (3) de feuilles d'emballage situés dans une couche correspondante de la pile, au moins un détecteur supplémentaire (33), connecté aux moyens extracteurs (14), qui détecte la présence de paquets (3) de feuilles d'emballage et la position correcte des moyens extracteurs (14) vis-à-vis de la pile (4) de paquets (3) de feuilles d'emballage et vis-à-vis du ou des paquets (3) restants devant encore être extraits afin de parvenir à la fin de la couche la plus haute de la pile (4).

20. Magasin suivant une ou plusieurs des revendications précédentes, **caractérisé en ce qu'**il a une structure en forme de pont (1) dont l'une des faces est l'extrémité de sortie des paquets (3) des feuilles d'emballage et est orientée vers un poste de traitement (5) qui suit, tandis que les autres faces sont libres pour la fixation d'un récipient collecteur (25), ce dernier et les moyens de déchargement (26, 28) étant agencés sous forme d'une unité de traitement modulaire séparée comportant des moyens préfixés permettant une fixation sur l'une quelconque des autres faces de la structure en forme de pont, de préférence dans des ouvertures (2) par lesquelles les piles (4) de feuilles d'emballage sont acheminées.
